# EUROPEAN PATENT SPECIFICATION

(11) **EP 2 868 420 B1**
(45) Date of publication and mention of the grant of the patent: **03.02.2016**
(21) Application number: 14179120.2
(22) Date of filing: 30.07.2014
(51) Int. Cl.: B23K 11/11, B23B 5/16, B23K 11/25, B24B 49/16, B23K 11/30

(54) **Grinding system with a detector for detecting relative movement amount of an electrode ; spot welding system with such grinding system**
Schleifsystem mit einem Sensor zum Detektieren einer relativen Bewegungsgröße einer Elektrode ; Punktschweißsystem mit einem solchen System
Système de polissage avec un capteur de détection d'une grandeur d'un déplacement relatif d'une électrode ; Système de soudage par points comprenant un tel système

(30) Priority: 31.07.2013 JP 2013159632
(43) Date of publication of application: 06.05.2015
(73) Proprietor: Kabushiki Kaisha Yaskawa Denki, Kitakyushu-shi, Fukuoka 806-0004 (JP)
(72) Inventor: Mori, Yosuke, Kitakyushu-shi, Fukuoka 806-0004 (JP); Sonoda, Teppei, Kitakyushu-shi, Fukuoka 806-0004 (JP)
(74) Representative: Viering, Jentschura & Partner mbB Patent- und Rechtsanwälte

(56) References cited:
- JP-A- H11 320 119
- JP-A- 2010 036 232
- US-A1- 2011 180 518

## Description

### BACKGROUND

The present invention relates to a grinding system according to the preamble of claim 1, see, for example, JP 2010/036 232 A), and a spot welding system comprising such grinding system (see claim 9).

### DISCUSSION OF THE BACKGROUND

Conventional spot welders widely used in assembly of automobile parts or in other processing have had degraded accuracy of welding through wear of a welding tip, which is an electrode portion for clamping a workpiece, and through attachment of welding waste to the surface of the welding tip after a long period of welding processing. This has been addressed by grinding the welding tip on a regular basis using a dresser, which is a grinder, thereby keeping the surface of the welding tip at a constant level of state.

To maintain a constant level of welding quality, it is important not only to keep the surface of the welding tip at a constant level of state, but also to recognize the distal end position of the welding tip, which depends on the grinding operation, and take the distal end position into consideration in the operation of clamping a workpiece. For example, Japanese Unexamined Patent Application Publication No. 2010-36232 describes a grinding system that includes grinding the welding tip and then measuring the distal end position of the welding tip.

Unfortunately, the above-described conventional technique has had instability problems of the amount of the welding tip scraped per grinding operation. This has caused excessive grinding of the welding tip, shortening its replacement time, or has caused the welding step to resume with less than a required grinding amount, resulting in a welding defect of a workpiece. Additionally, the step of measuring the distal end position of the welding tip is separate from the grinding, which has caused inferior productivity in that the operation rate of the spot welder is lowered.

The present disclosure has been made in view of the above-described circumstances, and it is an object of the present invention to provide a grinding system and a spot welding system that maintain an appropriate grinding amount of a welding tip.

### SUMMARY

According to one aspect of the present disclosure, a grinding system 2 according to the present invention is defined in claim 1, and includes a welding gun 11, a detector 18, a dresser 20, a determinator 40a, and an instructor 40b. The welding gun 11 is movable relative to a workpiece. The welding gun 11 includes a pair of clamp devices and at least one welding tip 15. The pair of clamp devices are configured to move relatively toward each other to clamp a workpiece. The at least one welding tip 15 is disposed on a clamp device among the pair of clamp devices. The detector 18 is configured to detect a relative movement amount of the at least one welding tip 15 with respect to another clamp device among the pair of clamp devices. The dresser 20 is configured to grind the at least one welding tip 15. The determinator 40a is configured to, while the dresser 20 is grinding the at least one welding tip 15, determine whether to make the dresser 20 end grinding the at least one welding tip 15 based on the movement amount detected by the detector 18. The instructor 40b is configured to, when the determinator 40a determines to make the dresser 20 end grinding the at least one welding tip 15, instruct the dresser 20 to end grinding the at least one welding tip 15.

The present disclosure provides a grinding system and a spot welding system that maintain an appropriate grinding amount of a welding tip.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is a diagram illustrating a procedure for a grinding operation executed by a grinding system according to an embodiment;
FIG. 2 is a diagram illustrating a general arrangement of a spot welding system;
FIG. 3A is a block diagram illustrating a configuration of a grinding system;
FIG. 3B is a block diagram illustrating a configuration of a modification of the grinding system;
FIG. 4A is a time chart of a grinding operation with a constant level of pressing force;
FIG. 4B is a time chart of a grinding operation with an incremental pressing force;
FIG. 5 is a diagram illustrating a positional relationship between a pair of welding tips and a grinding member in the grinding operation;
FIG. 6 is a flowchart illustrating a procedure for the grinding operation executed by the grinding system; and
FIG. 7 is a block diagram illustrating a configuration of elements associated with service life estimation for the welding tip.

### DESCRIPTION OF THE EMBODIMENTS

The embodiments will now be described with reference to the accompanying drawings, wherein like reference numerals designate corresponding or identical elements throughout the various drawings.

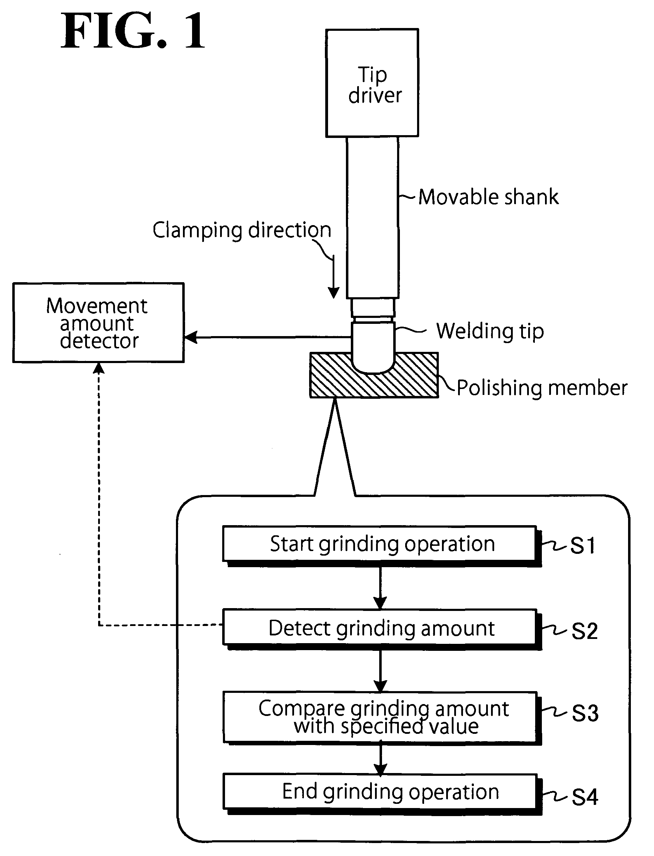

A grinding system according to this embodiment will be described by referring to FIG. 1. FIG. 1 is a diagram illustrating a procedure for a grinding operation executed by a grinding system according to this embodiment. As shown in FIG. 1, a welding tip is an electrode for resistance welding, and cooperates with another electrode, not shown, to clamp a workpiece between the electrodes and weld the workpiece. The welding tip is mounted to a distal end of a movable shank. The movable shank is movable in a clamping direction by a tip drive device.

Through increased frequency of the welding operation, the distal end of the welding tip may be subject to deformation due to heat or subject to worn, or attract welding waste, resulting in degraded welding quality. In view of this, the welding tip needs grinding on a predetermined welding frequency basis to keep the shape and surface of the welding tip at a constant level of state.

It is conventional practice to measure the position of the distal end of the welding tip every time a grinding operation is completed, since the position of the distal end of the welding tip is subject to change due to the grinding operation. The conventional practice, however, involves excessive grinding of the welding tip, shortening its replacement time, or causes the welding step to resume with less than a required grinding amount, resulting in a welding defect of a workpiece

In view of this, the grinding system according to this embodiment detects the grinding amount of the welding tip throughout the time during which the welding tip is being ground, and ends the grinding operation under a predetermined condition. This maintains an appropriate grinding amount of the welding tip.

Description will be made with regard to a procedure for the grinding operation on a welding tip by the grinding system according to this embodiment. For simplicity of description, it is assumed that the grinding member shown in FIG. 1 does not move in the clamping direction.

The grinding system according to this embodiment includes a grinding member to grind the welding tip. The welding tip is pushed ahead in the clamping direction by a tip drive device, and is moved while being ground at the distal end of the welding tip, so that the welding tip gradually becomes shorter (step S1).

The grinding member may be a grinding stone, a coated abrasive, a metal cutter, or another material that utilizes rotation, swing movement, vibration, or another movement to perform grinding. The grinding system according to this embodiment includes a movement amount detection device to detect a grinding amount, which is a movement amount of the welding tip during the time when the welding tip is being ground (step S2).

Here, the grinding system according to this embodiment stores a specified value, which is a grinding amount specified prior to the grinding operation. The grinding amount detected during the grinding operation is compared with the specified value (step S3). The grinding operation is ended when the detected grinding amount reaches the specified value (step S4).

Thus, the grinding system according to this embodiment detects the grinding amount of the welding tip during the grinding operation. This ensures that the grinding amount is controlled at an appropriate level throughout grinding operations, as opposed to the conventional practice allowing the grinding amount to vary among different grinding operations. For example, it is possible to set the specified value at a minimum grinding amount to maintain workpiece welding quality. This ensures an economy of the welding tip in that excessive grinding of the welding tip is eliminated.

Another conventional problem is that a welding tip lacking in sufficient grinding is used to weld a workpiece, resulting in a welding defect. In contrast, the grinding system according to this embodiment maintains an appropriate level of grinding amount, and thus eliminates or minimizes problems associated with an insufficient grinding amount.

Furthermore, the grinding system according to this embodiment maintains, for example, a constant level of grinding amount in every grinding operation of the welding tip. This eliminates the need for the step of measuring the position of the distal end of the welding tip. This improves the operation rate of the welding device over conventional operation rates.

Thus, the grinding system according to this embodiment maintains an appropriate level of grinding amount of the welding tip. This reduces the running cost of the welding tip, improves the welding quality, and improves the operation rate of the welding device at the same time, compared with conventional grinding systems.

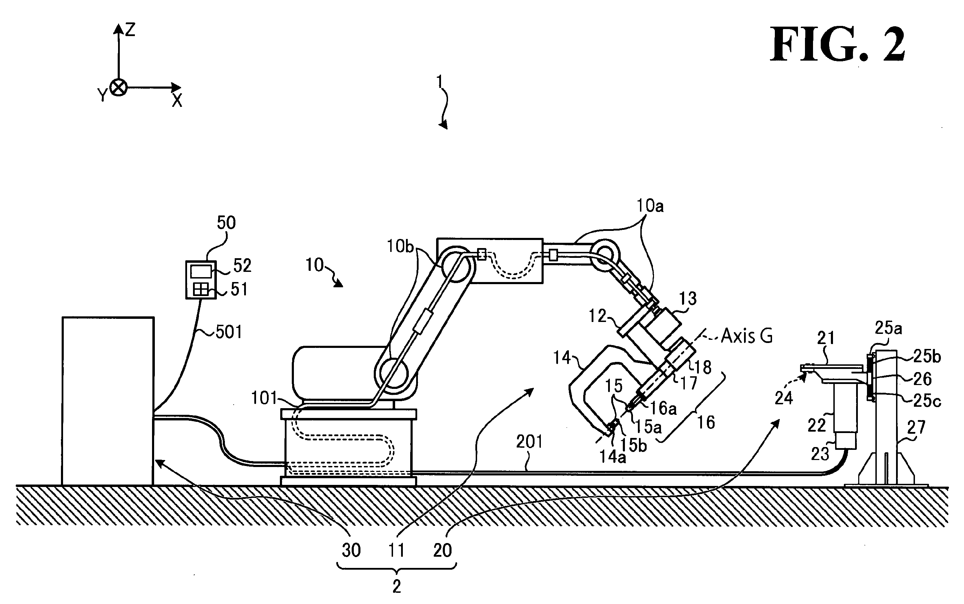

Next, a grinding system 2 according to this embodiment will be described by referring to FIG. 2. FIG. 2 is a diagram illustrating a general arrangement of a spot welding system. For ease of understanding, FIG. 2 shows a three-dimensional rectangular coordinate system including a Z axis is illustrated. The Z axis has a positive direction defined in the vertically upper direction and a negative direction defined in the vertically lower direction. Thus, a direction along the X-Y plane is a horizontal direction.

As shown in FIG. 2, the spot welding system 1 includes a grinding system 2, and includes a robot 10, a dresser 20, and a robot controller 30. The robot controller 30 includes a programming pendant 50.

The robot 10 is a multi-axis multi-articular robot, in which a plurality of link members 10a are mounted in a relatively movable manner through a plurality of joints 10b. The robot 10 includes, at the distal end, a welding gun 11 as an end effector.

A power/signal cable 101 extends from the robot controller 30 to the robot 10, and is partially led along the link members 10a and coupled to a welding transformer 13 of the welding gun 11.

Next, the welding gun 11 will be described. The welding gun 11 includes a base member 12, which is mounted to the link member 10a at the distal end of an arm of the robot 10. To the base member 12, the welding transformer 13, an arm 14, and a tip gun 16 are mounted.

The tip gun 16 includes a movable shank 16a, which has a welding tip 15a mounted to the distal end, a movement amount detector 18, and a tip driver 17. The tip driver 17 moves the movable shank 16a along an axis G so as to make the welding tip 15a cooperate with a welding tip 15b, described later, to perform a clamping operation.

The arm 14 is a planar, U-shaped arm having a form of a flat plate. On the plane, a line connects across a U-shaped opening, and this line matches the axis G. The tip gun 16 is mounted to one end point of the U-shaped opening with the welding tip 15a and the welding tip 15b facing each other. To the other end point of the arm 14, a fixed shank 14a is mounted with the welding tip 15b mounted to the distal end of the fixed shank 14a.

An example of the tip driver 17 is a servomotor. An example of the movement amount detector 18 is an encoder. The movement amount detector 18 detects the movement amount of the welding tip 15a based on the operation of the tip driver 17.

Next, the dresser 20 will be described. The dresser 20 includes a body 21, a support 27, and a guide shaft 25a. The support 27 is secured to a floor or another surface. The guide shaft 25a is mounted to the support 27. A base member 26 is disposed at the end of the body 21 on the side of the support 27.

The base member 26 is mounted to the guide shaft 25a in a slidably movable manner in the Z axis direction. The guide shaft 25a includes a pair of upper and lower springs 25b and 25c to bias the based member 26 to a neutral position of the guide shaft 25a.

The body 21 includes a grinding driver 22, a dresser detector 23, and a grinder 24. An example of the grinding driver 22 is a servomotor. The grinding driver 22 drives the grinder 24 into rotation, for example. An example of the dresser detector 23 is a current sensor and an encoder. The dresser detector 23 detects information indicating rotational torque and rotational frequency of the grinder 24. A power/signal cable 201 extends from the robot controller 30 to the dresser 20, and is coupled to the grinding driver 22 and the dresser detector 23 of the dresser 20.

The programming pendant 50 is an input/output device serving as a man-machine interface of the robot controller 30. For example, the programming pendant 50 includes: an input device 51 such as switches, buttons, and keys: and a notification device 52, which is a display device such as a display. The programming pendant 50 is coupled to the robot controller 30 through a power/signal cable 501.

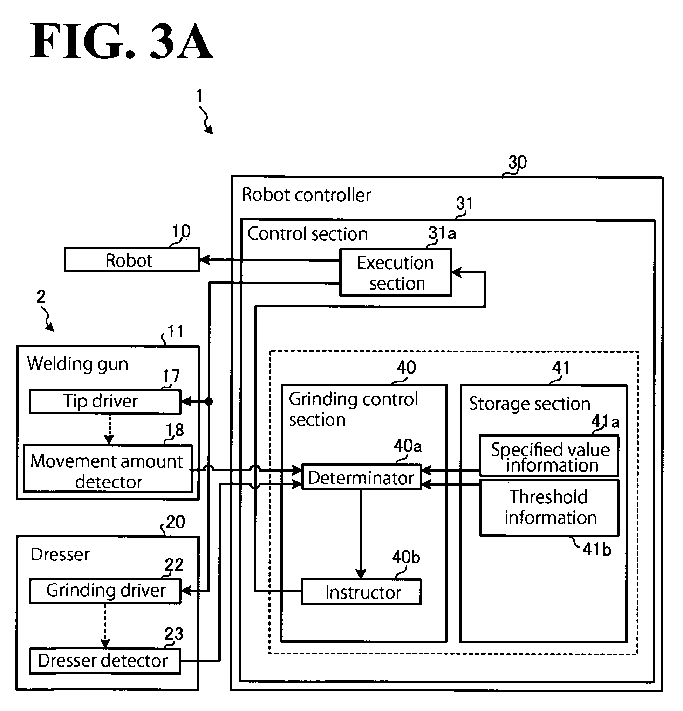

The grinding system 2 includes the welding gun 11, the dresser 20, and the robot controller 30. The grinding system 2 is controlled by a grinding control section 40, described later, which is incorporated in the robot controller 30. This configuration, however, should not be construed in a limiting sense; any other configuration with a similar function is possible. This will be described later by referring to FIG. 3A.

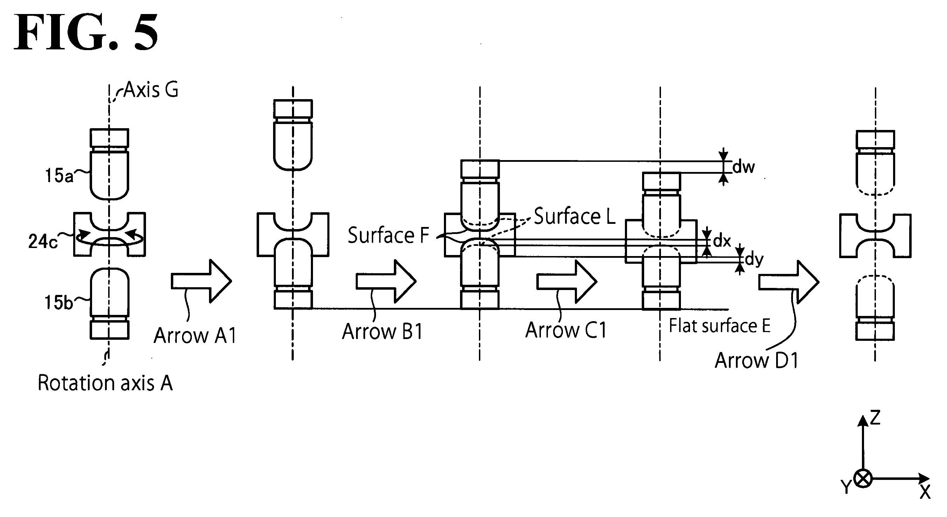

The "pair of welding tips 15", which are the welding tip 15a and the welding tip 15b, are ground simultaneously with the grinder 24 held between the welding tips 15. The guide shaft 25a has a guiding function of moving the grinder 24 in response to change in the clamping position of the pair of welding tips 15 while the grinder 24 is working on the grinding operation. This will be described later by referring to FIG. 5.

Next, the spot welding system 1 with the grinding system 2 according to this embodiment will be described by referring to FIG. 3A. FIG. 3A is a block diagram illustrating a configuration of the grinding system. For ease of understanding, the following description will omit functions inherent in general grinding systems such as a grinding operation without the grinding amount specified. Additionally, the following description will be regarding a grinding operation with respect to the welding tip 15a (see FIG. 2) alone.

While the grinder 24 (see FIG. 2) is capable of grinding the welding tip 15a utilizing various movements such as rotation, swing movement, and vibration, the following description will assume that the grinder 24 makes rotation to grind the welding tip 15a while making no movement in the Z axis direction shown in FIG. 2.

In the following description, the force that the welding tip 15a has on the grinder 24 will be referred to as "pressing force", and the rotational torque and the rotational frequency of the grinder 24 will be respectively referred to as "rotational torque" and "rotational frequency".

While in this embodiment the grinding control section 40 and a storage section 41 are incorporated in the robot controller 30 of the spot welding system 1, the grinding control section 40 and the storage section 41 may be separate from the robot controller 30 or may be incorporated in the robot 10 or the dresser 20.

The spot welding system 1 includes the robot 10, the welding gun 11, the dresser 20, and the robot controller 30. The robot controller 30 includes a control section 31. The control section 31 includes an execution section 31a, the grinding control section 40, and the storage section 41.

The robot 10 is a six-axis multi-articular robot and has an end movable portion attached with the welding gun 11. That is, the robot 10 is a general-purpose robot with an exchangeable end effector such as the welding gun 11. The welding gun 11 and the dresser 20 will be described later.

The control section 31 is a controller in charge of overall control of the robot controller 30. The execution section 31a is an execution section that makes the spot welding system 1 as a whole into operation by causing the robot 10, the tip driver 17, and the grinding driver 22 to execute respective, predetermined operations. Specifically, the execution section 31a causes the robot 10 to move the welding gun 11, causes the tip driver 17 to move the welding tip 15a, and causes the grinding driver 22 to rotate the grinder 24. In the embodiment of FIG. 3A, the execution section 31a controls the robot 10, the tip driver 17, and the grinding driver 22 at an identical control cycle. The grinding control section 40 and the storage section 41 will be described later.

Next, the grinding system 2 will be described. As shown in FIG. 3A, the grinding system 2 includes the welding gun 11, the dresser 20, the grinding control section 40, and the storage section 41. In FIG. 3A, the grinding control section 40 and the storage section 41 of the grinding system 2 are surrounded by a dotted line.

The welding gun 11 includes the tip driver 17 and the movement amount detector 18. The dresser 20 includes the grinding driver 22 and the dresser detector 23. The grinding control section 40 includes a determinator 40a and an instructor 40b. The storage section 41 stores specified value information 41a and threshold information 41b.

First, those elements that move the welding tip 15a and detect the movement amount will be described. The tip driver 17 moves the welding tip 15a along the axis G (see FIG. 2) to press the welding tip 15a against the grinder 24, thereby grinding the welding tip 15a on the grinder 24. An example of the tip driver 17 is a servomotor.

Based on data acquired from the tip driver 17, the movement amount detector 18 detects the distance over which the welding tip 15a moves on the axis G. An example of the movement amount detector 18 is an encoder.

Next, those elements associated with the driving of the dresser 20 will be described. The grinding driver 22 drives the grinder 24 into rotation. An example of the grinding driver 22 is a servomotor. The dresser detector 23 detects the rotational torque and the rotational frequency of the grinding unit based on data acquired from the grinding driver 22. Examples of the dresser detector 23 are a current sensor and an encoder.

Next, the grinding control section 40 will be described. During the grinding operation, the determinator 40a acquires the movement amount, which is the grinding amount of the welding tip 15a obtained by the movement amount detector 18, and compares the movement amount with the specified value information 41a.

The specified value information 41a is a grinding amount of the welding tip 15a that is specified in advance. Based on the above-described comparison, the determinator 40a performs processing of determining whether to continue the grinding operation.

When the movement amount of the welding tip 15a is smaller than the specified value information 41a, the determinator 40a transmits to the instructor 40b a signal of instruction to continue the grinding operation. When the movement amount of the welding tip 15a reaches the specified value information 41 a, the determinator 40a transmits to the instructor 40b a signal of instruction to end the grinding operation.

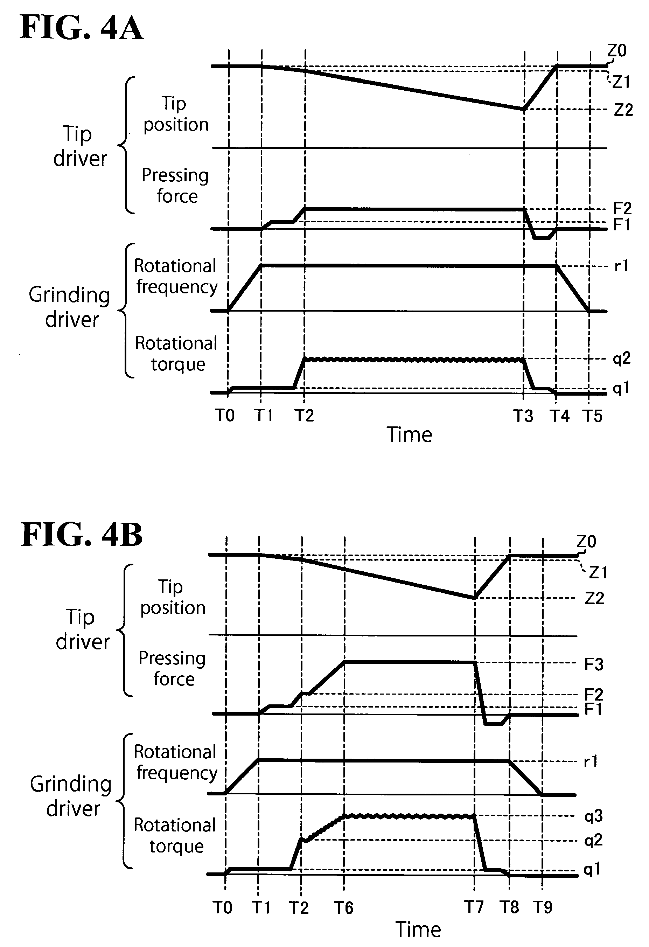

During the grinding operation with respect to the welding tip 15a, the determinator 40a is capable of increasing the pressing force based on the rotational torque and the rotational frequency of the grinder 24 acquired from the dresser detector 23, thereby shortening the time required for the grinding operation. This will be described later by referring to FIGs. 4A and 4B.

Upon receipt of the signal of instruction to end the grinding operation from the determinator 40a, the instructor 40b performs processing of instructing the robot 10, the tip driver 17, and the grinding driver 22 to perform operations corresponding to the received signal through the execution section 31a. For example, upon receipt of the signal of instruction to end the grinding operation from the determinator 40a, the instructor 40b instructs the execution section 31a to stop the operations of the tip driver 17 and the grinding driver 22.

The storage section 41 is a storage device such as a hard disk drive and a non-volatile memory. The content of the specified value information 41a is as described above and will not be elaborated here. The threshold information 41b is information associated with thresholds other than the movement amount of the welding tip 15a, other examples including an allowable time period of the grinding operation, a minimum value of the grinding speed, and an upper limit of the rotational torque. The threshold information 41b is used in a grinding operation with an incremental pressing force, which will be described later by referring to FIG. 4B.

The tip driving motor 17 and the grinding driver 22 each may be other than a servomotor; it is possible to use a motor or an actuator that is driven by electricity or compressed air. When the tip driver 17 is a servomotor, the movement amount detector 18 may be other than an encoder, other examples including a hall device and a resolver. It is also possible to use an operation device that calculates the position based on the speed and the torque of the servomotor.

In the above description, the movement amount of the welding tip 15a is detected based on an encoder value of the tip driver 17 acquired by the movement amount detector 18. It is also possible to acquire the movement amount in any other manner.

The function of the movement amount detector 18 to perform position detection may be performed by using, for example, a non-contact position sensor or a contact sensor. Examples of a non-contact sensor include an eddy-current sensor, an optical sensor, an ultrasonic sensor, and an image sensor. For example, a position sensor may be disposed in the dresser 20 or another element to detect the position data of the welding tip 15a, and the movement amount detector 18 may acquire the amount of change of the position data as a movement amount.

The grinding system 2 in this example uses such feedback control that proceeds the grinding operation simultaneously with a comparison between the specified amount and the movement amount (grinding amount) detected during the grinding operation. It is also possible to use any other control method.

For example, insofar as the tip driver 17 is capable of controlling the position of the welding tip 15a, it is possible to omit the determinator 40a and use such open loop control that moves the welding tip 15a by a specified amount in response to an instruction from the instructor 40b that is based on the specified value information 41a.

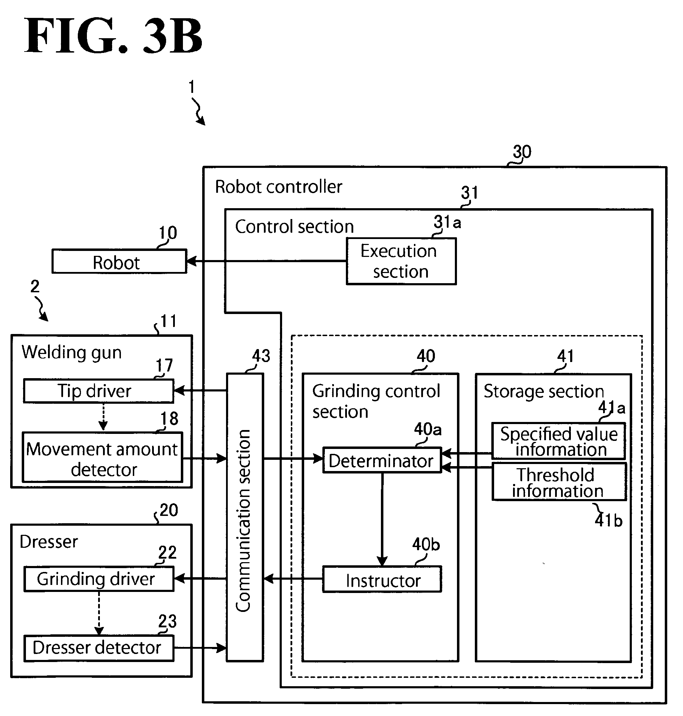

Next, a modification of the embodiment shown in FIG. 3A will be described. FIG. 3B is a block diagram illustrating a configuration of the modification of the grinding system. In FIG. 3B, the components shown in FIG. 3A are denoted with the same reference numerals. The following description will The following description will avoid redundancy by omitting the description already given by referring to FIG. 3A.

As shown in FIG. 3B, the grinding system 2 may include a communication section 43. The communication section 43 is a communication device such as a LAN board, and performs processing of transmitting to the grinding control section 40 data received from the movement amount detector 18 and the dresser detector 23. The communication section 43 also performs processing of transmitting to the tip driver 17 and the grinding driver 22 the data received from the grinding control section 40.

Next, the grinding operation with respect to the welding tip 15a (see FIG. 2) with a constant level of pressing force will be described by referring to FIG. 4A. FIG. 4A is an operation time chart in the grinding operation with a constant level of pressing force.

For ease of understanding, the following description will assume that the grinder 24 (see FIG. 2) makes rotation to grind the welding tip 15a while making no movement in the Z axis direction shown in FIG. 2. Additionally, the following description will be regarding a grinding operation with respect to the welding tip 15a alone.

When the pressing force and the rotational torque make changes such as rising and falling, there is response time during which an initial value reaches a target value. The response time, however, is negligibly small in the context of the time scale of the grinding operation. The pressing force is defined as positive in the negative Z axis direction.

At time T0, the dresser 20 (see FIG. 2) starts rotation at rotational torque q1. When the rotational frequency reaches r1 at time T1, the welding tip 15a at tip position Z0 starts moving in the negative Z axis direction at pressing force F 1. At time T2, the welding tip 15a is at tip position Z1 and contacts the grinder 24, thus starting a grinding operation. An example of the method of detecting the contact between the welding tip 15a and the grinder 24 is to monitor the rotational torque of the dresser 20, and to determine that the contact has occurred when the rate of increase of the rotational torque becomes equal to or higher than a predetermined reference value.

Between time T2 and time T3, at which the grinding amount reaches the specified value, the grinding operation proceeds at approximately constant pressing force F2 and approximately constant rotational torque q2. At time T3, the grinding amount reaches the specified value (Z1 - Z2), and the tip driver 17 operates in a direction opposite to the direction of grinding so as to move the welding tip 15a away from the grinder 24 and back to tip position Z0 at time T4. Between time T3 and time T4, the pressing force of the welding tip 15a moving in the positive Z axis direction is negative because the pressing force is defined as positive in the negative Z axis direction.

When the rotational frequency becomes zero at time T5, the processing associated with the grinding operation ends. Thus, the grinding system 2 of this embodiment implements the grinding operation at a predetermined grinding amount while maintaining a constant level of pressing force and a constant level of rotational torque.

The grinding system 2 according to this embodiment is also capable of increasing the pressing force during the grinding operation and thus increasing the grinding speed so as to shorten the time required for the grinding operation. This will be described below by referring to FIG. 4B.

It will be assumed that the grinding driver 22 (see FIG. 2) is a servomotor or a similar device whose rotational torque is adjustable in accordance with a load under such a condition that the rotational frequency is constant. That is, the grinding driver 22 is speed controllable. FIG. 4B is an operation time chart of the grinding operation with an incremental pressing force. The following description will avoid redundancy by omitting the description already given by referring to FIG. 4A.

In the grinding operation with an incremental pressing force, the pressing force at time T2 gradually increases from F2. Immediately after time T2, there is a period of time in which the pressing force does not increase. This period is a negligible tolerance that results from detection of the pressing force and the rotational torque and a response delay of the operation of the tip drive device.

In order to follow the increasing pressing force, the grinding driver 22 adjusts the rotational torque to increase from q2, thereby maintaining a constant level of rotational frequency. Here, the determinator 40a compares the rotational torque detected by the dresser detector 23 with the threshold in the threshold information 41b, which is defined as the upper limit of the rotational torque. An example of the threshold is a maximum capability value of the grinding driver 22.

When the rotational torque is equal to or lower than the threshold, the determination 40a causes the instructor 40b to increase the pressing force. When the rotational torque is equal to the threshold, the determination performs processing of causing the instructor 40b to maintain the pressing force at a constant level. As shown in FIG. 4B, the rotational torque reaches threshold rotational torque q3 at time T6. Then, the pressing force is kept from increasing and maintained at F3. Time T4 and time T5 shown in FIG. 4A respectively correspond to time T8 and time T9.

The grinding operation continues until time T7, at which the grinding amount reaches the specified value (Z1 - Z2). Here, the pressing force is F3 > F2, and the rotational torque is q3 > q2. Further, the grinding time is (T7 - T2) < (T3 - T2), which indicates that the grinding time is shortened compared with the grinding operation at constant pressing force F2 shown in FIG. 4A.

Alternatively, the determinator 40a may calculate the movement speed, which is a movement amount per predetermined time period, and make a determination to increase the pressing force only when the movement speed is lower than a predetermined threshold stored in the threshold information 41b. This ensures an economical operation with minimized wear of the grinder 24 (see FIG. 2) and other devices due to the grinding going into an excessive speed while keeping the time required for the grinding operation within an allowable time period.

The allowable time period for the grinding operation is stored as a threshold in the threshold information 41b. When the grinding amount falls short of the specified value in the allowable time period, the determinator 40a may determine this as an abnormality and notify the notification device 52 (see FIG. 2) of the abnormality through the instructor 40b.

It is possible to detect the movement speed using a speed sensor. An example of the speed sensor is a Doppler effect-based sensor, which detects a reflected wave of a radiation wave such as light and sound, and detects speed from the difference in frequency between the detected reflection and the radiation wave.

Thus, during the grinding operation, the grinding system 2 according to this embodiment increases the pressing force within a range that is equal to or less than a predetermined upper limit so as to increase the grinding speed. This shortens the time required for the grinding operation.

Next, description will be made with regard to a method of grinding amount calculation in a case where the pair of welding tips 15 (see FIG 2) are simultaneously ground.

FIG. 5 is a diagram illustrating a positional relationship between the pair of welding tips and the grinding member in the grinding operation.

The grinder 24 (see FIG. 2) includes a grinding member 24c, which is symmetrical in the Z axis direction and rotates about a rotation axis A to grind the pair of welding tips 15. The grinding member 24c is schematically shown to rotate about the rotation axis A.

Among the surfaces of each of the pair of welding tips 15, an unground surface will be referred to as surface F, and a ground surface will be referred to as surface L. As shown in FIG. 2, the grinder 24 moves in response to change in the clamping position of the pair of welding tips 15 during the grinding operation.

This ensures that the pressing force that the welding tip 15a has on the welding tip 15b through the grinder 24 is equal to the force that the welding tip 15b has, in return, on the welding tip 15a through the grinder 24. This ensures that the pair of welding tips 15 are equally ground at the same time. This is referred to as "equalizing function".

The robot 10 (see FIG. 2) positions the welding gun 11 (see FIG. 2) with respect to the grinder 24 in such a manner that the axis G matches the rotation axis A. The robot 10 moves the welding gun 11 in the positive Z axis direction to bring the welding tip 15b into contact with the rotating grinding member 24c (arrow A1).

From now on, the welding tip 15b remains stationary until the grinding operation is completed. For example, the bottom surface of the welding tip 15 is secured to a flat surface E. Next, the tip driver 17 (see FIG. 2) brings the welding tip 15a into contact with the grinding member 24c (arrow B1).

An example of the method of detecting the contact between the grinder 24 and the welding tip 15a or the welding tip 15b is to monitor the rotational torque of the dresser 20, and to determine that the contact has occurred when the rate of increase of the rotational torque becomes equal to or higher than a predetermined reference value.

The welding tip 15a and the welding tip 15b are equally ground due to the equalizing function. Hence, calculating an accumulated value of the grinding amount ensures grasp in advance of the pre-grinding positions of the distal ends of the pair of welding tips 15. In view of this, it is possible to use the accumulated value of the grinding amount as a basis of detecting the contact between the grinding member 24c and the welding tip 15a or the welding tip 15b from the positional relationship between the pair of welding tips 15 and the grinding member 24c.

The following discusses a case (of arrow C1) from the state in which the pair of welding tips 15 are in contact with the grinding member 24c; that is, the tip driver 17 moves the welding tip 15a by a distance dw in the negative Z axis direction. As the welding tip 15a moves, the grinding member 24c with the equalizing function moves the welding tip 15b by a distance dy in the negative Z axis direction while grinding the welding tip 15b as well as the welding tip 15a.

The distance dw is obtained as the sum of the grinding amounts of the welding tip 15a and the welding tip 15b. The welding tips 15a and 15b are regarded as being ground by the same grinding amount dx. Thus, the grinding amount dx of each of the welding tips 15a and 15b is regarded as dw/2. The distance dy, over which the grinder 24 moves, is equal to the grinding amount dx = dw/2 of the welding tip 15b.

In this case, the determinator 40a compares a value of half the distance dw, which is the movement amount of the welding tip 15a detected by the movement amount detector 18

(see FIG. 2), with the specified value in the specified value information 41a. When dw/2 becomes equal to the specified value, the determinator 40a determines that the grinding operation is completed, and thus the pair of welding tips 15 are released from clamped state (arrow D1).

Thus, the grinding system 2 according to this embodiment equally grinds the pair of welding tips 15 at the same time. Hence, the grinding amount of each of the pair of welding tips 15 is regarded as being equal to half the movement amount of the welding tip 15a in the grinding operation.

This ensures that even when the pair of welding tips 15 are ground, the grinding operation proceeds with simultaneous grasp of the grinding amounts of both welding tips. Additionally, the grinding operation of the pair of welding tips 15 takes the same amount of time as the amount of time that the grinding operation of the welding tip 15a alone takes.

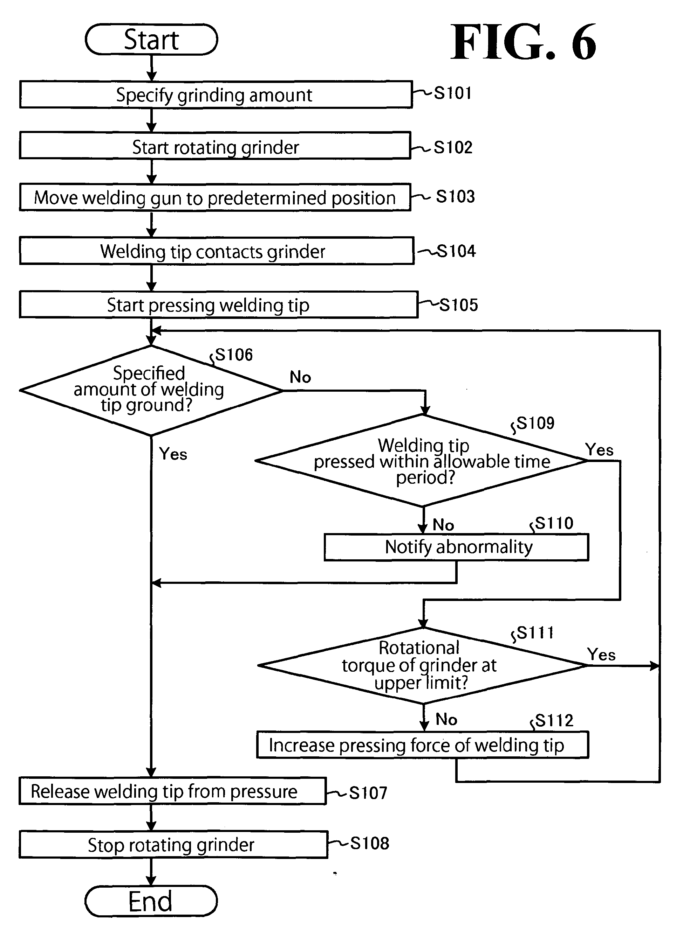

Next, a procedure for the grinding operation executed by the grinding system 2 shown in FIG. 3A will be described by referring to FIG. 6. FIG. 6 is a flowchart illustrating the procedure for the grinding operation executed by the grinding system.

As shown in FIG. 6, an operator inputs a specified value of the grinding amount through the input device 51 (step S101). The storage section 41 stores the specified value as the specified value information 41a. Then, the instructor 40b rotates the grinder 24 through the execution section 31a (step S102).

The execution section 31a brings the robot 10 into operation make the axis G of the welding gun 11 match the rotation axis A of the grinder 24 (step S103). The processing at steps 102 and 103 may be simultaneously executed, or the order of steps 102 and 103 may be reversed.

Next, the tip driver 17 moves the welding tip 15a, and based on the rate of increase of the rotational torque, the determinator 40a determines that the welding tip 15a has contacted the grinder 24 (step S104).

The grinder 24 preferably starts rotating before the welding tip 15a contacts the grinder 24. This is because if the grinder 24 starts rotating after the welding tip 15a has contacted the grinder 24, wear of the grinding member 24c may be facilitated, and tear and chips may occur on a grinding surface.

When the welding tip 15a contacts the grinder 24, the tip driver 17 starts pressing the welding tip 15a (step S105). The movement amount detector 18 detects the amount in which the welding tip 15a is moved while being ground. The determinator 40a compares the movement amount, that is, the grinding amount, with the specified valued stored in the specified amount information 41a (step S106).

The determinator 40a compares the period of time during which the welding tip 15a is pressed and the allowable time period of the grinding operation stored in the threshold information 41b. When the grinding amount is smaller than the specified value (No in step S106) and when the time of the comparison is over the allowable time period of the grinding stored in the threshold information 41b (No in step S109), then the instructor 40b causes the notification device 52 to notify an abnormality (step S110), and makes an instruction for the processing at and after step S107.

When the time of determination at step S109 is within the allowable time period of the grinding (Yes in step S109), the determinator 40a determines whether the rotational torque exceeds the upper limit of the rotational torque described in the threshold information 41b (step S111).

When at step S111 the rotational torque is smaller than the upper limit (No in Step S111), the determinator 40a causes the instructor 40b to make an instruction for an increase in the pressing force (step S 112). When at step S111 the rotational torque is at the upper limit (Yes in step S111), the determinator 40a allows the grinding operation to proceed with the conditions maintained, and the processing returns to step S106.

When the determinator 40a determines that the grinding amount has reached the specified value (Yes in step S106), the welding tip 15a is released from the grinder 24 (step S107). Then, the grinder 24 stops rotating (step S108), and the processing ends.

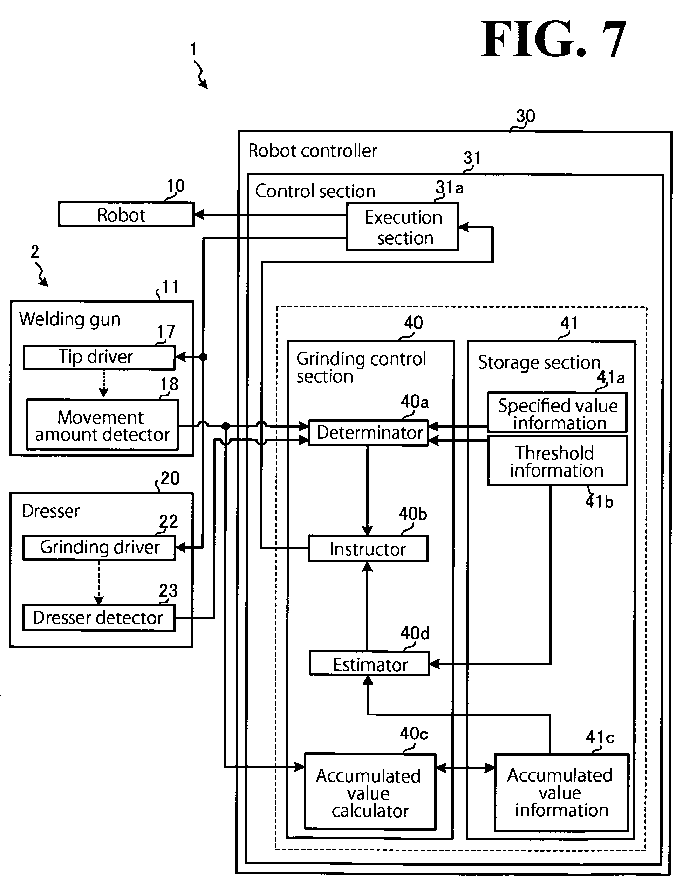

The grinding system 2 according to this embodiment also estimates a service life associated with the usability limit of the welding tip. FIG. 7 is a block diagram illustrating a configuration of elements associated with the service life estimation for the welding tip. The following description will avoid redundancy by omitting the description already given by referring to FIG. 3A.

As shown in FIG. 7, the grinding control section 40 further includes an accumulated value calculator 40c and an estimator 40d. The storage section 41 further stores accumulated value information 41c.

The accumulated value calculator 40c acquires the grinding amount of the welding tip 15a (see FIG. 2) per grinding operation from the movement amount detector 18, and adds the grinding amount to the accumulated value information 41c to calculate the latest accumulated value of the grinding amount.

The latest accumulated amount calculated by the accumulated value calculator 40c is stored in the accumulated value information 41c. Here, the accumulated value information 41c represents an accumulated grinding amount, starting from unground state, of a welding tip that is targeted for service life estimation.

The estimator 40d estimates the service life of the welding tip based on the threshold information 41b and the latest accumulated value stored in the accumulated value information 41c. Here, the threshold information 41b represents the maximum possible grinding amount of the welding tip targeted for service life estimation.

The instructor 40b causes the notification device 52 (see FIG. 2) to notify the estimated value of the service life. The service life may be expressed as the number of the grinding operations with respect to the specified value, or may be estimated as usable time of the welding device converted from the operation time of the welding device. The accumulated value is calculated on an individual welding tip basis, and is reset to zero when the welding tip is replaced with a new welding tip.

Thus, the grinding system 2 according to this embodiment estimates the usability limit of the welding tip based on the accumulated grinding amount. Since the grinding amount is grasped on an individual grinding operation basis, the service life is estimated accurately.

As has been described hereinbefore, the grinding system according to an aspect of the embodiment includes the welding gun, the detector (movement amount detection device), the dresser, the determinator, and the instructor. The welding gun includes a welding tip at least on one clamp device among a pair of clamp devices that are configured to move relatively toward each other to clamp a workpiece, and is movable relative to the workpiece. The detector is configured to detect a relative movement amount of the welding tip with respect to another clamp device among the pair of clamp devices. The dresser is configured to grind the welding tip. The determinator is configured, during grinding of the welding tip, determine whether to end the grinding of the welding tip based on the movement amount detected by the detector. The instructor is configured to, when the determinator determines to end the grinding of the welding tip, make an instruction to end the grinding of the welding tip.

Obviously, numerous modifications and variations of the present disclosure are possible in light of the above teachings. It is therefore to be understood that within the scope of the appended claims, the present disclosure may be practiced otherwise than as specifically described herein.

- 1: Spot welding system
- 2: Grinding system
- 10: Robot
- 11: Welding gun
- 15: Pair of welding tips
- 16: Tip gun
- 17: Tip driver
- 18: Movement amount detector
- 20: Dresser
- 21: Body
- 22: Grinding driver
- 23: Dresser detector
- 24: Grinder
- 24c: Grinding member
- 30: Robot controller
- 31: Control section
- 40: Grinding control section
- 50: Programming pendant

## Claims

1. A grinding system (2) comprising a dresser (20) configured to grind the at least one welding tip (15); and **characterized by**:
a welding gun (11) movable relative to a workpiece, the welding gun (11) comprising:
a pair of clamp devices configured to move relatively toward each other to clamp a workpiece; and
at least one welding tip (15) disposed on a clamp device among the pair of clamp devices;
a detector (18) configured to detect a relative movement amount of the at least one welding tip (15) with respect to another clamp device among the pair of clamp devices;
a determinator (40a) configured to, while the dresser (20) is grinding the at least one welding tip (15), determine whether to make the dresser (20) end grinding the at least one welding tip (15) based on the movement amount detected by the detector (18); and
an instructor (40b) configured to, when the determinator (40a) determines to make the dresser (20) end grinding the at least one welding tip (15), instruct the dresser (20) to end grinding the at least one welding tip (15).

2. The grinding system (2) according to claim 1, wherein while the dresser (20) is grinding the at least one welding tip (15), the instructor (40b) is configured to make an instruction to maintain a constant level of pressing force that the at least one welding tip (15) has on the dresser (20).

3. The grinding system (2) according to claim 1,
wherein the dresser (20) comprises a grinding plate (24), and
wherein the instructor (40b) is configured to make an instruction to increase the pressing force that the at least one welding tip (15) has on the dresser (20) while keeping a torque to rotate the grinding plate (24) equal to or less than a predetermined upper limit.

4. The grinding system (2) according to claim 3, wherein the instructor (40b) is configured to make the instruction to increase the pressing force when the movement amount of the at least one welding tip (15) per unit time is less than a predetermined threshold while the dresser (20) is grinding the at least one welding tip (15).

5. The grinding system (2) according to any one of claims 1 to 4,
wherein the at least one welding tip (15) comprises welding tips (15) each disposed on a corresponding clamp device among the pair of clamp devices, and
wherein the instructor (40b) is configured to regard half the movement amount detected by the detector (18) as a grinding amount of each of the welding tips (15), and is configured to determine whether to make the dresser (20) end grinding each of the welding tips (15) based on half the movement amount.

6. The grinding system (2) according to any one of claims 1 to 5, wherein when the determinator (40a) does not determine to make the dresser (20) end grinding the at least one welding tip (15) within a predetermined grinding time period, the instructor (40b) is configured to make an instruction to make a notification indicating an abnormality of the dresser (20).

7. The grinding system (2) according to any one of claims 1 to 6, wherein the instructor (40b) is configured to accumulate a grinding amount of the at least one welding tip (15) from when the dresser (20) starts grinding the at least one welding tip (15) until the dresser (20) ends grinding the at least one welding tip (15), and is configured to make an instruction to make a notification indicating a usability limit of the at least one welding tip (15) based on the accumulated grinding amount.

8. The grinding system (2) according to any one of claims 1 to 7, wherein the welding gun (11) is mounted to a distal end of an arm (14) of a robot (10).

9. A spot welding system 1, **characterized by** comprising a grinding system (2) according to any one of claims 1 to 8.

## Patentansprüche

1. Ein Schleifsystem (2) aufweisend einen Abrichter (20), der ausgebildet ist, um die mindestens eine Schweißspitze (15) zu schleifen, und **gekennzeichnet durch**:
eine relativ zu einem Werkstück bewegbare Schweißpistole (11), wobei die Schweißpistole (11) aufweist:
ein Paar von Klemmvorrichtungen, die ausgebildet sind, um sich relativ aufeinander zuzubewegen, um ein Werkstück einzuklemmen; und
mindestens eine Schweißspitze (15), die an einer Klemmvorrichtung aus dem Paar von Klemmvorrichtungen angeordnet ist;
ein Detektor (18), der ausgebildet ist, einen relativen Bewegungsbetrag der mindestens einen Schweißspitze (15) in Bezug zu einer anderen Klemmvorrichtung aus dem Paar von Klemmvorrichtungen zu detektieren;
ein Determinator (40a), der ausgebildet ist, während der Abrichter (20) die mindestens eine Schweißspitze (15) schleift, zu bestimmen, ob der Abrichter (20) dazu zu veranlassen ist, das Schleifen der mindestens einen Schweißspitze (15) zu beenden basierend auf dem von dem Detektor (18) detektierten Bewegungsbetrag; und
ein Instruktor (40b), der ausgebildet ist, um, wenn der Determinator (40a) bestimmt, den Abrichter (20) dazu zu veranlassen, das Schleifen der mindestens einen Schweißspitze (15) zu beenden, den Abrichter (20) zu instruieren, das Schleifen der mindestens einen Schweißspitze (15) zu beenden.

2. Das Schleifsystem (2) gemäß Anspruch 1, wobei, während der Abrichter (20) die mindestens eine Schweißspitze (15) schleift, der Instruktor (40b) ausgebildet ist, um eine Instruktion zu erzeugen, ein konstantes Level von Presskraft zu erhalten, die die mindestens eine Schweißspitze (15) auf den Abrichter (20) ausübt.

3. Das Schleifsystem (2) gemäß Anspruch 1, wobei der Abrichter (20) eine Schleifplatte (24) aufweist, und wobei der Instruktor (40b) ausgebildet ist, um eine Instruktion zu erzeugen, die Presskraft zu erhöhen, die die mindestens eine Schweißspitze (15) auf den Abrichter (20) ausübt, während ein Drehmoment, das die Schleifplatte (24) rotieren lässt, gleich oder kleiner als ein vorbestimmtes Höchstlevel gehalten ist.

4. Das Schleifsystem (2) gemäß Anspruch 3, wobei der Instruktor (40b) ausgebildet ist, um die Instruktion zu erzeugen, die Presskraft zu erhöhen, wenn der Bewegungsbetrag der mindestens einen Schweißspitze (15) pro Zeiteinheit kleiner als ein vorbestimmter Schwellenwert ist, während der Abrichter (20) die mindestens eine Schweißspitze (15) schleift.

5. Das Schleifsystem (2) gemäß irgendeinem der Ansprüche 1 bis 4, wobei die mindestens eine Schweißspitze (15) Schweißspitzen (15) aufweist, die jede an einer entsprechenden Klemmvorrichtung aus dem Paar von Klemmvorrichtungen angeordnet ist, und
wobei der Instruktor (40b) ausgebildet ist, die Hälfte des von dem Detektor (18) detektierten Bewegungsbetrags als Schleifbetrag von jeder der Schweißspitzen (15) aufzufassen, und ausgebildet ist, zu bestimmen, ob der Abrichter (20) dazu zu veranlassen ist, das Schleifen jeder der Schweißspitzen (15) zu beenden basierend auf der Hälfte des Bewegungsbetrags.

6. Das Schleifsystem (2) gemäß irgendeinem der Ansprüche 1 bis 5, wobei, wenn der Determinator (40a) nicht bestimmt, dass der Abrichter (20) dazu zu veranlassen ist, das Schleifen der mindestens einen Schweißspitze (15) innerhalb eines vorbestimmten Schleifzeitraumes zu beenden, der Instruktor (40b) ausgebildet ist, um eine Instruktion zum Erzeugen einer Benachrichtigung zu erzeugen, die eine Anomalität des Abrichters (20) anzeigt.

7. Das Schleifsystem (2) gemäß irgendeinem der Ansprüche 1 bis 6, wobei der Instruktor (40b) ausgebildet ist, einen Schleifbetrag der mindestens einen Schweißspitze (15) zu akkumulieren von wenn der Abrichter (20) das Schleifen der mindestens einen Schweißspitze (15) beginnt bis der Abrichter (20) das Schleifen der mindestens einen Schweißspitze (15) beendet, und ausgebildet ist, um eine Instruktion zum Erzeugen einer Benachrichtigung zu erzeugen, die eine Verwendbarkeitsgrenze der mindestens einen Schweißspitze (15) angibt basierend auf dem akkumulierten Schleifbetrag.

8. Das Schleifsystem (2) gemäß irgendeinem der Ansprüche 1 bis 7, wobei die Schweißpistole (11) an einem distale Ende eines Arms (14) eines Roboters (10) angebracht ist.

9. Ein Punktschweißsystem 1 **gekennzeichnet durch** das Aufweisen eines Schleifsystems (2) gemäß irgendeinem der Ansprüche 1 bis 8.

## Revendications

1. Système de meulage (2) comprenant un outil de dressage (20) configuré pour meuler ladite au moins une extrémité de soudage (15) et **caractérisé par** :
- un pistolet de soudage (11) pouvant être déplacé par rapport à une pièce, le pistolet de soudage (11) comprenant :
- une paire de dispositifs de serrage configurés pour se déplacer de manière relative l'un vers l'autre pour serrer une pièce ; et
- au moins une extrémité de soudage (15) disposée sur un dispositif de serrage de la paire de dispositifs de serrage ;
- un détecteur (18) configuré pour détecter une quantité de déplacement relative de ladite au moins une extrémité de soudage (15) par rapport à un autre dispositif de serrage de la paire de dispositifs de serrage ;
- un dispositif de détermination (40a) configuré pour, alors que l'outil de dressage (20) meule ladite au moins une extrémité de soudage (15), déterminer s'il convient ou non d'amener l'extrémité de l'outil de dressage (20) à meuler ladite au moins une extrémité de soudage (15) sur la base de la quantité de déplacement détectée par le détecteur (18) ; et
- un dispositif d'instruction (40b) configuré pour, lorsque le dispositif de détermination (40a) détermine qu'il convient d'amener l'extrémité de l'outil de dressage (20) à meuler ladite au moins une extrémité de soudage (15), ordonner à l'outil de dressage (20) de terminer le meulage de ladite au moins une extrémité de soudage (15).

2. Système de meulage (2) selon la revendication 1, dans lequel, alors que l'outil de dressage (20) meule ladite au moins une extrémité de soudage (15), le dispositif d'instruction (40b) est configuré pour donner une instruction de maintenir un niveau constant de force de pression que ladite au moins une extrémité de soudage (15) applique à l'outil de dressage (20).

3. Système de meulage (2) selon la revendication 1,
- dans lequel l'outil de dressage (20) comprend une plaque de meulage (24), et
- dans lequel le dispositif d'instruction (40b) est configuré pour donner une instruction d'augmenter la force de pression que ladite au moins une extrémité de soudage (15) applique à l'outil de dressage (20) tout en maintenant un couple pour faire tourner la plaque de meulage (24) égal ou inférieur à une limite supérieure prédéterminée.

4. Système de meulage (2) selon la revendication 3, dans lequel le dispositif d'instruction (40b) est configuré pour donner l'instruction d'augmenter la force de pression lorsque la quantité de déplacement de ladite au moins une extrémité de soudage (15) par unité de temps est inférieure à un seuil prédéterminé alors que l'outil de dressage (20) meule ladite au moins une extrémité de soudage (15).

5. Système de meulage (2) selon l'une quelconque des revendications 1 à 4,
- dans lequel ladite au moins une extrémité de soudage (15) comprend des extrémités de soudage (15) disposées chacune sur un dispositif de serrage correspondant de la paire de dispositifs de serrage, et
- dans lequel le dispositif d'instruction (40b) est configuré pour considérer la moitié de la quantité de déplacement détectée par le détecteur (18) comme étant une quantité de meulage de chacune des extrémités de soudage (15), et est configuré pour déterminer s'il convient ou non d'amener l'extrémité de l'outil de dressage (20) à meuler chacune des extrémités de soudage (15) sur la base de la moitié de la quantité de déplacement.

6. Système de meulage (2) selon l'une quelconque des revendications 1 à 5, dans lequel, lorsque le dispositif de détermination (40a) détermine qu'il ne convient pas d'amener l'extrémité de l'outil de dressage (20) à meuler ladite au moins une extrémité de soudage (15) dans une période de temps de meulage prédéterminée, le dispositif d'instruction (40b) est configuré pour donner une instruction d'effectuer une notification indiquant une anomalie de l'outil de dressage (20).

7. Système de meulage (2) selon l'une quelconque des revendications 1 à 6, dans lequel le dispositif d'instruction (40b) est configuré pour accumuler une quantité de meulage de ladite au moins une extrémité de soudage (15) à partir de l'instant auquel l'outil de dressage (20) débute le meulage de ladite au moins une extrémité de soudage (15) jusqu'à l'instant auquel l'outil de dressage (20) termine le meulage de ladite au moins une extrémité de soudage (15), et est configuré pour donner une instruction d'effectuer une notification indiquant une limite de capacité d'utilisation de ladite au moins une extrémité de soudage (15) sur la base de la quantité de meulage accumulée.

8. Système de meulage (2) selon l'une quelconque des revendications 1 à 7, dans lequel le pistolet de soudage (11) est monté sur une extrémité distale d'un bras (14) d'un robot (10).

9. Système de soudage par points 1, **caractérisé en ce qu'**il comprend un système de meulage (2) selon l'une quelconque des revendications 1 à 8.
